(19) Europäisches Patentamt
European Patent Office
Office européen des brevets

(11) **EP 4 075 108 B1**

(12) **EUROPEAN PATENT SPECIFICATION**

(45) Date of publication and mention
of the grant of the patent:
**02.10.2024 Bulletin 2024/40**

(21) Application number: **22168965.6**

(22) Date of filing: **10.11.2016**

(51) International Patent Classification (IPC):
*B01F 23/45* (2022.01)      *B01F 25/21* (2022.01)
*B01F 25/20* (2022.01)      *B01F 23/40* (2022.01)
*B01F 25/50* (2022.01)      *B01F 35/21* (2022.01)
*B01F 35/22* (2022.01)      *B01F 35/88* (2022.01)
*F01M 9/02* (2006.01)       *F01M 11/10* (2006.01)
*F16N 39/00* (2006.01)      *G01G 17/04* (2006.01)
*G01G 23/01* (2006.01)      *G01G 19/34* (2006.01)

(52) Cooperative Patent Classification (CPC):
**F01M 11/10; F16N 39/00; B01F 23/45; B01F 23/49;
B01F 25/21; B01F 25/28; B01F 25/50;
B01F 35/2112; B01F 35/2209; B01F 35/881;
F01M 9/02; G01G 17/04; G01G 23/01;**
F16N 2270/54; G01G 19/34;          (Cont.)

(54) **BLENDER AND METHOD FOR PREPARING AN OIL TO BE SUPPLIED TO THE CYLINDERS OF A TWO-STROKE CROSSHEAD ENGINE**

MIXER UND VERFAHREN ZUR HERSTELLUNG EINES ÖLS ZUR VERSORGUNG DER ZYLINDER EINES ZWEITAKT-KREUZKOPFMOTORS

MÉLANGEUR ET PROCÉDÉ DE PRÉPARATION D'UNE HUILE DESTINÉE À ÊTRE FOURNIE AUX CYLINDRES D'UN MOTEUR À CROSSE À DEUX TEMPS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.11.2015 DK PA201570729
11.11.2015 DK PA201570730
11.11.2015 DK PA201570731
11.11.2015 DK PA201570732
11.11.2015 DK PA201570733**

(43) Date of publication of application:
**19.10.2022 Bulletin 2022/42**

(62) Document number(s) of the earlier application(s) in
accordance with Art. 76 EPC:
**16863709.8 / 3 374 610**

(73) Proprietor: **A.P. Møller - Mærsk A/S
1263 Copenhagen K (DK)**

(72) Inventor: **BAK WEIMAR, Henrik
1263 Copenhagen K (DK)**

(74) Representative: **EIP
Fairfax House
15 Fulwood Place
London WC1V 6HU (GB)**

(56) References cited:
**EP-A1- 1 640 442      EP-A1- 2 497 818
EP-A1- 2 767 578      US-A- 4 328 874
US-A1- 2003 033 871**

(52) Cooperative Patent Classification (CPC): (Cont.)
G01G 23/002

**Description**

This application is divided from European patent application number 16863709.8.

TECHNICAL FIELD

This disclosure relates to a blender and method for preparing an oil to be supplied to the cylinders of a two-stroke crosshead engine, in particular to a method for preparing such an oil on board of a marine vessel where the two-stroke crosshead engine is installed or on site at a power plant where the engine is used as a prime mover and to a blender for preparing an oil to be supplied to the cylinders of a two-stroke crosshead engine.

BACKGROUND

Of the oils that are used in the lubrication of a large two-stroke compression ignited internal combustion engine two stand out and are quite different in chemical composition and physical properties from one another. The oil used in the crankcase lubrication system is referred to as system oil, and lubricates and cools the main, bottom end and crosshead bearings, the crosshead guide plates, camshaft, bearings and followers, and the chain or gear drive. On modern engines the oil is also used to cool the piston undersides. The system oil is in general never fully replaced, but topped up over time to maintain its condition.

The oil used to lubricate the running surface of the cylinder liners and the piston rings as they reciprocate in the cylinder liner and to neutralise the acids formed in the combustion chamber by the combustion of sulphur in the fuel is referred to as cylinder oil. However, herein this oil is also denoted as the oil to be supplied to the cylinders.

Acid neutralisation is a critical property to protect the inner surface of the cylinder liner from the acids generated during combustion. The cylinder lubrication oil is a total-loss oil since it is consumed through combustion and scraped down in the lubrication process. The cylinder oil is depleted with each revolution of the main engine and replaced by fresh cylinder oil through intermittent injections.

The oil that is supplied to the cylinders usually has an SAE (society of automotive engineering) viscosity equivalent grade of 50 and can have any total base number (TBN) between 20 and 150 for the neutralization of acid products generated during the combustion process. The TBN reflects the oil's reserve alkalinity, i.e. its ability to neutralize acidic materials. The TBN of an oil can e.g. be determined in accordance with the ASTM D2896 standard, which is a standard test method for base number of petroleum products by potentiometric perchloric acid titration. Typically system oil has an SAE viscosity grade of 30 with a relatively low TBN that is typically below 10. These values are though merely by way of example, and may vary depending on the actual application-specific design of the systems that the oils are used in.

In recent years, there has been a trend towards blending the oil for delivering to the cylinders of the main engine on board the marine vessel where the main engine is installed. Hereto, used system oil is withdrawn from the crankcase lubrication system and blended with a TBN agent, such as a TBN additive, a TBN additive package or a fresh cylinder oil with a high TBN to create a cylinder oil with the appropriate lubrication characteristics, as known from WO 2006/032271 (it is noted that there is no clear technical difference between a TBN agent that comprises one or more alkaline additives in oil and a fresh cylinder oil).

In recent years two-stroke crosshead engines have been operated for a large portion of their operation time at an engine load that is significantly below their maximum continuous rating. This is due to the fact that many freight ship companies choose to sail slower (slow steaming) than before, which results in the main engines being operated well below the maximum continuous rating, since these marine vessels were originally constructed to sail at significantly higher speed.

The viscosity of the cylinder oil specified (by the original engine manufacturer - OEM) for a particular engine is generally selected such that the actual viscosity (dynamic (shear) viscosity) at the temperature of the cylinder liner where the cylinder oil is applied is optimal for the cylinder liner temperature at maximum engine load (100% maximum continuous rating), i.e. sufficiently high for providing a proper lubrication of the piston rings against the inner surface of the cylinder liner at maximum engine load. The viscosity of a cylinder oil in operation is affected by a number of factors. As temperature increases, the viscosity of a fluid decreases, and vice-versa. During the operation of a two-stroke crosshead engine the temperature varies according to engine load and RPM (revolutions per minute). As engine load and RPM increase, the temperature also increases and hence the viscosity of the lubricating oil decreases.

For a typical two-stroke crosshead engine the oil delivered to the cylinders should have a viscosity between approximately 1.5 and 3 cSt at the (running) temperature of the cylinder liner. The cylinder liner temperature at the maximum continuous rating of the engine (maximum load) will typically be well above 200°C, e.g. approximately 240 to 250°C, whilst the cylinder liner temperature at lower loads, such as 60% of the maximum continuous rating, will typically be well below 200°C, e.g. approximately 170- 180°C.

Present dosage regimes for cylinder oil are based on fuel sulphur content, i.e. a cylinder oil with a high TBN used when the engine runs on fuel with a high sulphur content and a cylinder oil with a lower TBN is used when the engine is running on fuel with less sulphur. The feed rate of electronically controlled cylinder lubrication devices is typically proportional to the load, e.g. some engine manufacturers/developers recommend 0.7-0.8 g/kWh, others 0.65 g/kWh.

In known engines where the blending of the oil for delivering to the cylinders of the main engine is done locally by e.g. blending used oil with a TBN agent or with a cylinder oil with a high TBN to create a cylinder oil with the appropriate lubrication characteristics the same principles are applied, i.e. the feed rate is proportional to the engine load and the TBN is selected in relation to sulphur content of the (heavy) fuel oil. For engines that use locally blended cylinder oil it is possible to react quicker to changes in the fuel sulphur content of the fuel since the TBN of the oil supplied to the cylinders can be readily adjusted in accordance with need.

The costs associated with cylinder oil form a significant part of the operating cost of an engine in e.g. a marine vessel or in a power plant.

Thus, there is a need for a reliable and simple capacity to effectively blend a base oil, such as used system oil or fresh cylinder oil with a TBN agent and possibly also with other agents or additives on board of a marine vessel or in situ in a power plant.

There is also a need for a capacity to accurately blend a base oil, such as used system oil or fresh cylinder oil with a TBN agent and possibly also with other agents or additives on board of a marine vessel or in situ in a power plant. Especially, on board of a marine vessel the conditions are not always optimal for precise measurements, due to e.g. the motion of the marine vessel, such as the linear motions heaving, swaying and surging and the rotation motions pitch, roll and yaw, that may affect measurements.

There is also a need for a capacity to accurately and effectively blend a base oil, such as used system oil or fresh cylinder oil with a TBN agent and possibly also with other agents or additives on board of a marine vessel or in situ in a power plant. Especially, on board of a marine vessel the conditions are not always optimal for precise measurements, due to e.g. the motion of the marine vessel, such as the linear motions heaving, swaying and surging and the rotation motions pitch, roll and yaw, that may affect measurements.

There is also a need for safe and reliable a capacity to blend a base oil, such as used system oil or fresh cylinder oil with a TBN agent and possibly also with other agents or additives on board of a marine vessel or in situ in a power plant. Especially, on board of a marine vessel the safety requirements are particularly high, and therefore there is a need to provide a blender that fulfils these high safety requirements.

## SUMMARY

It is an object of the invention to provide a blender that at least partially accommodates one or more of the above needs.

According to a first aspect, there is provided a blender in accordance with claim 1.

By providing a blender that bases its measurements on weight and by providing control that is capable of calibrating the weight under difficult circumstances, such as a moving ship, inaccurate and relatively simple and inexpensive blender is provided that can be used on board of a marine vessel.

In a first possible implementation form of the fist aspect the tank is provided with a minimum level sensor with an output that indicates that a liquid level in the tank is above a given minimum level or not, and wherein the controller is configured to perform the calibration process only when the new level sensor indicates that the liquid level in the tank is above the given minimum level.

In a second possible implementation form of the first aspect the controller is configured to initiate supply of oil from the first port to the tank if the minimum level sensor indicates that the liquid level in the tank is below the given minimum level.

In a third possible implementation form of the first aspect the controller is configured to control sequential supply of the oil and the composition for filling the tank in order to blend the oil and the composition, and wherein the controller is configured to perform the calibration process before supplying the oil and the composition.

According to a second aspect there is provided a method in accordance with claim 8.

In a first possible implementation form of the second aspect c) is performed before a).

In a second possible implementation form of the second aspect the method further comprises d) ensuring that a liquid level in the tank is above a given minimum level before step c).

In a third possible implementation form of the second aspect the method further comprises d) blending the oil and the composition in the tank to obtain a blended composition in the tank.

In a fourth possible implementation form of the second aspect the method further comprises e) discharging the blended composition from the tank. These and other aspects of the invention will be apparent from the embodiment(s) described below.

BRIEF DESCRIPTION OF THE DRAWINGS

In the following detailed portion of the present disclosure, the invention will be explained in more detail with reference to the example embodiments shown in the drawings, in which:

Fig. 1 is a diagrammatic view of an example embodiment of a two-stroke compression ignited crosshead engine with its lubrication system,
Fig. 2 is a diagram showing a blender according to an example embodiment for use in the lubrication system of Fig. 1,
Fig. 3 is a side view of the blender of Fig. 2,
Fig. 4 is an end view of the blender of Fig. 2,
Fig. 5 is a top view of the blender of Fig. 2,
Fig. 6 is a flowchart illustrating an example embodiment of the operation of the blender of Fig. 2, and
Fig. 7 is a diagram showing a blender according to another example embodiment for use in the lubrication of Fig. 1.

DETAILED DESCRIPTION

In the following detailed description, a blender for preparing cylinder oil from two or more different compositions for use in a two-stroke crosshead engine will be described by the example embodiments. A method of operating the blender will also be described by the example embodiments.

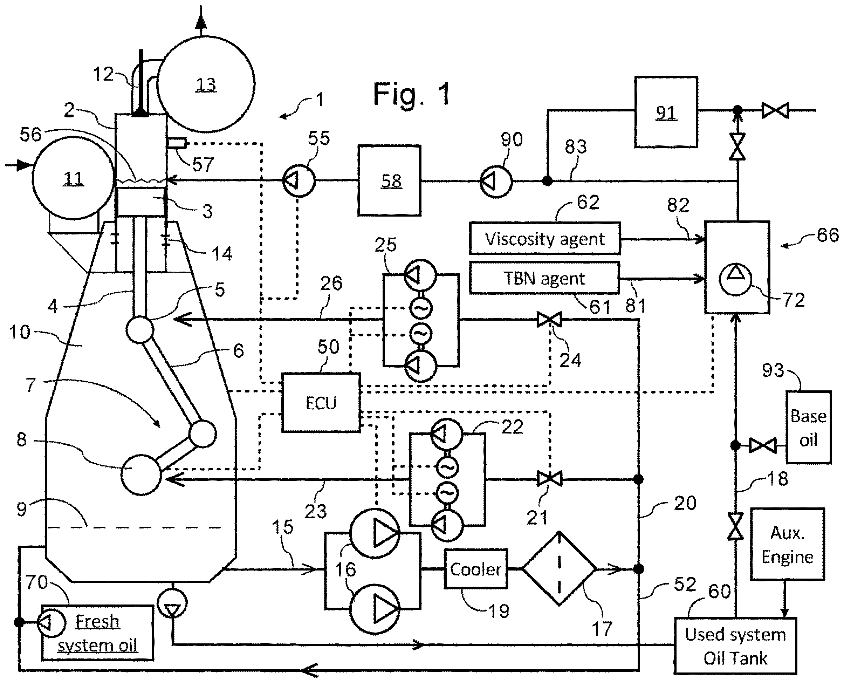

Fig. 1 diagrammatically shows a large low speed turbocharged compression ignited two-stroke crosshead engine 1 with a crankshaft 7 and crossheads 5 in sectional view. Two-stroke crosshead engines typically have between four and sixteen cylinders in line, carried by an engine frame 10. The engine 1 may e.g. be used as the main engine in an ocean going vessel, or as prime mover in a stationary power plant. At the maximum continuous rating of the engine the total output of the engine may, for example, range from 5,000 to 110,000 kW.

The engine is a diesel (compression ignited internal combustion) engine of the two-stroke uniflow type with scavenge ports 14 at the lower region of the cylinders 1 and an exhaust valve 12 at the top of the cylinders 1. The engine can be operated on various types of fuel, such as e.g. marine diesel, heavy fuel, or gas. The scavenge air is passed from the scavenge air receiver 11 to the scavenge ports 14 of the individual cylinders 2. A piston 3 in the cylinder liner 2 compresses the scavenge air, fuel is injected and combustion follows and exhaust gas is generated. When an exhaust valve 12 is opened, the exhaust gas flows through an exhaust duct associated with the cylinder concerned into the exhaust gas receiver 13 and onwards through a first exhaust conduit to a turbocharger (not shown), from which the exhaust gas flows away from the atmosphere. The turbocharger (not shown) delivers pressurized scavenge air to a scavenge air conduit leading to the scavenge air receiver 11.

A piston rod 4 extends from the bottom of the piston to the crosshead 5. A connecting rod 6 connects the crosshead 5 to one of the throws of the crankshaft 7. The crankshaft 7 is rotation suspended in the engine frame and bedplate by the main bearings 8. A thrust bearing (not shown) is provided at the aft of the engine to accommodate the thrust created by a propeller (not shown) driven by the engine 1. The thrust bearing is supplied with lubrication oil by the same conduit that supplies the main bearings 8. In the main bearings 8 an oil film between the bearing surface and the journal surface carries the journal and prevents substantially any direct contact between the journal surface and the inside surface of the shells and provides lubrication. A flow of lubrication oil is supplied to the bearing surface. The lubrication oil film assists in cooling the main bearing.

Two-stroke crosshead engines include an array of components that are for lubrication and/or cooling purposes supplied with lubrication oil. All these components are provided with lubrication oil via the crankcase lubrication system except for the cylinders and piston rings which receive another type of oil from the cylinder oil system.

The crankcase lubrication system is essentially a closed loop lubrication system in which the system oil is circulated. The crankcase lubrication system provides lubrication and cooling for a range of components of the engine. For example, the crankshaft 7 is placed in an oil sump 9 that is provided in the lower part of the engine 1 and supplied with lubrication oil under pressure that is circulated through the oil sump 9. Other lubrication positions, such as bearings, etc. are separately provided with lubrication oil, as will be described in greater detail further below. The surplus leakage oil is collected in the oil sump 9. A lubrication oil supply loop is provided for supplying lubrication oil to all lubrication oil consumers. The lubrication oil supply loop includes a supply conduit 15 that starts at the oil sump 9. The supply conduit 15 includes two low-pressure pumps 16 arranged in parallel with respective electric drive motors for arranging the oil transport (although it is understood that there could be any other number of supply pumps). The supply conduit 15 also includes a cooler 19 for cooling the lubrication oil and a filter 17 for filtering out contamination. This can in one embodiment be a B$\sigma$K 50$\mu$ filter.

The supply conduit 15 splits downstream of filter 17 into an oil sump supply conduit 52 and a bearing supply conduit 20. The oil sump supply conduit 52 delivers filtered and cooled lubrication oil to the oil sump 9. The bearing supply conduit 20 branches into a main bearing supply conduit 23 and a crosshead bearing supply conduit 26. The main bearing supply conduit 23 also provides the thrust bearing the aft of the engine 1 with lubrication oil.

The main bearing supply conduit 23 includes an electronically controlled valve 21 for controlling the flow. The main bearing supply conduit 23 also includes a feed pump 22. In the present embodiment a pair of parallel feed pumps is shown, but it is understood that any number of pumps could be used, although a plurality of pumps is preferred for redundancy reasons. The feed pump 22 is driven by one or more electric drive motors. The main bearing supply conduit 23 delivers a substantially constant flow of lubrication oil to the main bearings 8 during engine operation.

The crosshead bearing supply conduit 26 includes an electronically controlled valve 24 for controlling the flow. The crosshead bearing supply conduit 26 also includes a feed pump 25. In the present embodiment a pair of parallel feed pumps are shown, but it is understood that any number of pumps could be used, although a plurality of pumps is preferred for redundancy reasons. The feed pump 25 is driven by one or more electric drive motors. The crosshead bearing supply conduit 26 delivers a substantially constant flow of lubrication oil to the crosshead bearings during engine operation.

A portion of the system oil is withdrawn from the crankcase lubrication system. Hereto, a feed pump transports an amount of system oil from the oil pan 9 to a used system oil tank 60. The used system oil tank 60 may also receive used oil from other engines or other devices, such as e.g. from auxiliary engines (generator sets) on board of a marine vessel together with the large two-stroke crosshead engine 1.

A cylinder oil system supply conduit 18 connects to the used system oil tank 60. The cylinder oil system supply conduit 18 provides the cylinder oil system with used system oil that has been withdrawn from the crankcase lubrication system. The cylinder oil system supply conduit eighteen is also connected via a valve to a base oil tank 93, in case it is desired to use another base oil instead of used system oil. For example, fresh oil could be used, such as for example a commercially available cylinder oil with a relatively low TBN, i.e. a cylinder oil that has the required properties to be directly used in the cylinder but with a low TBN so that it can be blended with a higher TBN composition, such as a TBN agent or TBN additive or another cylinder oil with a high TBN to achieve a desired TBN for the blended product.

In order to maintain a substantially constant amount of system oil in the crankcase lubrication system, an approximately equal amount of fresh system oil as withdrawn therefrom is added to the crankcase lubrication system from a fresh oil system tank 70 using a feed pump that connects to the oil sump supply conduit 52. Thus, the system oil is continually replenished with fresh system oil, thereby rendering it practically unnecessary to completely replace the system oil in the crankcase lubrication system with fresh system oil.

The cylinder oil system includes a blender 66 that receives base oil, such as e.g. used system oil from the used system oil tank 60. The first or base oil can be a used or fresh oil. In the embodiment of Fig. 1 the feeding of the base oil is controlled by an electronic control unit 50. The electronic control unit 50 can be part of the blender 66 or part of a central electronic control unit 50 that controls many aspects of the engine 1.

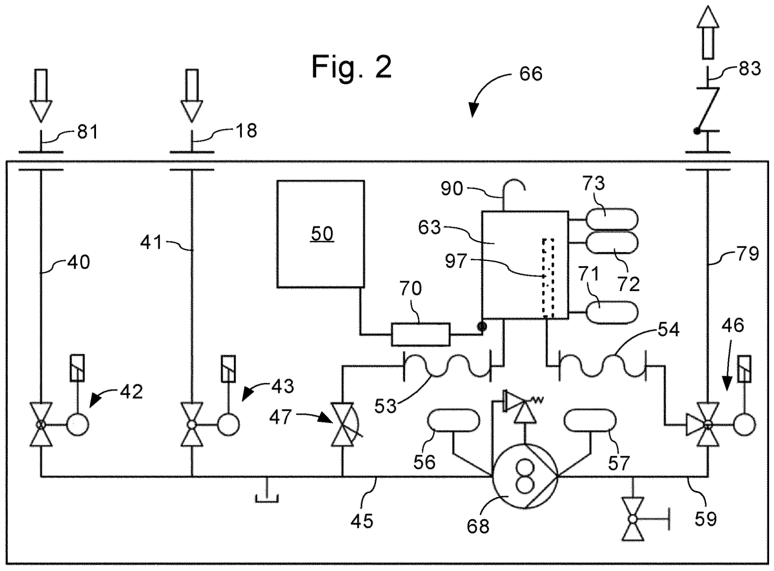

The electronic control unit 50 controls the blender 66 so that the system oil is supplied to the blender 66 intermittently for batch wise preparation of oil to be delivered to the cylinders 2; this is explained here below in more detail with reference to Fig. 2.

In the blender 66 the withdrawn system oil (first or base oil) is mixed or blended with a TBN agent (e.g. TBN additive, TBN additive package, high TBN oil or high TBN cylinder oil) and optionally with a viscosity agent to prepare the oil to be supplied to the cylinders. The details of the blending process are described in detail further below. From the blender 66 the prepared oil, "blended cylinder oil" is transported by a feed pump 90 via a feed conduit 83 to a blended cylinder oil day tank 58. An additional cylinder oil storage tank 91 is provided and connected to the feed conduit 83. The additional cylinder oil storage tank 91 can be used as an additional storage tank for cylinder oil that is blended by the blender 66 or for storing "fresh" cylinder oil for if it is desired to provide the cylinders with a fresh cylinder oil instead of a blended product from the blender 66.

The blended cylinder oil day tank 58 is connected to a blended cylinder oil dosage pump 55. The dosage pump 55 ensures precise and correctly timed dosage of the cylinder oil to the individual cylinders 2. In an embodiment the electronic control unit 50 is operatively connected to the cylinder oil dosage pump 55 and configured to control the feed rate of cylinder oil delivered by dosage pump 55 to be proportional to the engine load. The oil to be supplied to the cylinders is delivered to the liner surface of the cylinder liner 2 to a plurality of cylinder lubrication holes through the wall of the cylinder liner. The cylinder lubrication holes are distributed around the circumference of the cylinder liner 2 at substantially equal height. The lubrication holes are connected to one another by a lubrication line 56 that typically has a zigzag shape. The supply of the blended cylinder lubrication oil through lubrication holes and the lubrication line 56 is precisely timed to occur when the piston 3 passes the lubrication line 56. Thereafter, the piston rings distribute the oil over the running surface of the cylinder liner 2.

The blender 66 receives a TBN agent from a source of TBN agent 61 via a supply conduit. The TBN agent is a composition with a high TBN that can be used to increase the TBN of a base oil with a first TBN that is lower than the second TBN of the TBN agent. After blending the base oil with the TBN agent a blended product, e.g. a blended cylinder oil with a third TBN is achieved. The TBN of the blended product is selected by the operator and depends on the operating conditions of the engine, such as for example the sulfur content in the fuel.

The source of TBN agent can be a tank with a dedicated TBN agent with a TBN for example between approximately 100 and approximately 400, or a tank with an oil with a high TBN such as a fresh commercially available "cylinder oil" with a high TBN such as e.g. a TBN equal to or above 80 or equal to or above 100.

In an embodiment the blender 66 also receives a viscosity agent from a source of viscosity agent 62 via a supply conduit. The source of viscosity agent can be a tank with a dedicated viscosity agent or a tank with an oil with a high viscosity, such as an oil with a viscosity equal to or above SAE 50 or equal to or above SAE 60. The oil used as viscosity agent is preferably single grade SAE. Alternatively, the viscosity agent may have a low viscosity in order to reduce the viscosity of the blended oil, for example equal to or below SAE 30.

The system oil for the crankcase lubrication system is normally a high quality paraffinic base oil containing a number of performance additives. The alkalinity of the system oil (defined by its TBN number) must be sufficient to neutralize any strong acids formed from combustion of the fuel which may find their way into the crankcase.

The characteristics of an example of system oil for use in the crankcase lubrication system of a two-stroke crosshead engine are as follows:

| | | |
|---|---|---|
| SAE No | | 30 |
| Specific Gravity (15/15C) | | 0.894 |
| Flash Point min C | | 229 |
| Pour Point max C | -15 | |
| Viscosity: | cSt (mm$^2$/s) at 40C | 108 (108) |
| at 100C | | 11.8 |
| Viscosity Index | | 97 |
| Total Base Number | | 6.0 |
| Sulphated Ash, % wt. | | 0.73 |

The total base number is an indication of the alkalinity of an oil in the milligrams of acid, expressed in equivalent milligrams of potassium hydroxide (KOH), required to neutralize all basic constituents.

The oil delivered to the cylinders 2 by the cylinder oil system must be thermally stable. The oil needs to be able to retain an oil film at the high surface temperatures of e.g. the piston rings and the cylinder liner 2. The oil delivered to the cylinders must have anti wear characteristics and detergents to minimize deposits on the pistons 3 and in the ring grooves.

The oil delivered to the cylinders typically has a high TBN between 30 and 100 to neutralize the acids formed by the combustion of sulphur in the fuel. The required TBN value is dependent on e.g. the sulphur content in the fuel (which may vary) and is set at a value anywhere between e.g. 30 and 100, or controlled by the electronic control unit 50. Alkaline additives can make up a significant portion of the oil delivered to the cylinders.

The viscosity of fresh cylinder oil delivered to the cylinders is normally relatively high (e.g. 21 cSt (21 mm$^2$/s) at 100°C for an SAE 50 oil) in order to lubricate effectively at the higher temperatures (e.g. 190°C) of the cylinder liner 2 resulting in a viscosity of approximately 3,2 cSt (3,2 mm$^2$/s) where the oil is applied. However, when a blended cylinder oil is supplied to the cylinders, the viscosity of the blended product has typically been much lower without any perceivable drawbacks.

The oil delivered to the cylinders is a "use once consumable". The oil is injected into the cylinder at a feed rate to give optimum protection against acid corrosion and microseizures (scuffing).

The characteristics of an example of blended cylinder oil for supplying to the cylinders of a two-stroke crosshead engine are as follows:

| | | |
|---|---|---|
| Pour Point °C | -9 | |
| Viscosity: | cSt (mm$^2$/s) at 100°C | 14 (14) |
| Viscosity Index | 100 | |
| Total Base Number (mg. KOH/g) | 80 | |

A non-exhaustive list of viscosity agents includes but is not limited to: Used and fresh finished lubricants such as hydraulic oils, turbine oils, monograde and multigrade engine oils, gear oils, base oils including naphthenic and paraffinic mineral oils (of Group I, II and III), synthetic polyalphaolefins (PAO), polymeric entities such as polymethylmethacrylate (PMMA) and olefin copolymers (OCP) and mixtures thereof.

The source of viscosity agent may comprise a source of high viscosity agents for increasing the resulting viscosity and a source of low viscosity agents for decreasing the resulting viscosity.

Adjusting the TBN preferably comprises adjusting at least one additive level or adding one or more additives, where the additives comprise at least one base comprising basic salts of alkaline or earth alkaline elements, and/or detergents and/or dispersants. Alternatively, adjusting the TBN comprises blending with a high TBN oil, such as a commercial cylinder oil with a high TBN value, e.g. with a TBN above 100.

The alkaline/earth alkaline elements may be e.g. K, Na, Ca, Ba, Mg or the like. The basic salts may belong to the inorganic chemical families of e.g. oxides, hydroxides, carbonates, sulphates or the like. The detergents may belong to the organic chemical families of e.g. sulfonates, salicylates, phenates, sulphophenates, Mannich-bases and the like. The dispersants may belong to the organic chemical families of succinimides or the like.

An electronic control unit 50 receives signals that contain information about the engine, such as specific temperatures and pressures, and operating conditions, such as the engine load and speed. The electronic control unit 50 is also connected, e.g. via signal cables to the feed pumps 22 for the main bearings, the control valve 21 in the main bearing supply conduit 23, the feed pumps 25 for the crosshead banks, control valve 24 in the crosshead bearing supply conduit 26 and to the control valve 24 in the crosshead bearing supply conduit 26.

The electronic control unit 50 is also connected, e.g. via signal cables to the blender 66 and to the cylinder oil dosage pump 55. Alternatively, the blender 66 may be provided with its own electronic control unit (not shown), that carries out the functions that are described below that relates to the blender 66.

The electronic control unit 50 is configured to determine the amount (flow rate) of lubrication oil that needs to be delivered to the main bearings 8. The electronic control unit 50 is also configured to determine the amount (flow rate) of lubrication oil that needs to be delivered to the crosshead bearings.

The electronic control unit 50 can also be configured to determine the required TBN for the oil that is delivered to the cylinders 2. Hereto, the electronic control unit 50 is in receipt of information on the fuel quality, i.e. sulphur content, and determines the required TBN e.g. from lookup tables stored in the electronic control unit 50 or by using an algorithm or equation stored in the electronic control unit 50, taking into account the sulfur content of the fuel.

In an embodiment the electronic control unit 50 is in receipt of a signal representative of the engine load. The engine load is a parameter that is indicative of the cylinder liner temperature. Alternatively, the electronic control unit is in receipt of a signal from the temperature sensor (not shown) that measures the jacket cooling water temperature. The jacket cooling water temperature is also indicative of the temperature of the cylinder liner and can be used as an alternative parameter by the electronic control unit 50. Alternatively, the electronic control unit is in receipt of a signal from a temperature sensor 57 in the cylinder liner. Based on the temperature of the cylinder liners, or on a parameter representative thereof the electronic control unit 50 is configured to determine the optimal viscosity for the oil that is delivered to the cylinders.

Alternatively, the electronic control unit 50 determines directly from the parameter that is indicative of the cylinder liner temperature the required proportions of withdrawn system oil, TBN agent and viscosity agent.

The electronic control unit 50 is configured to determine the required viscosity for the oil that is delivered to the cylinders 2. Hereto, the electronic control unit 50 is provided with an algorithm that determines the required proportions of withdrawn system oil, viscosity agent and TBN agent that results in a prepared oil in the blender 66 that has the determined optimal TBN value and the determined optimal viscosity. The electronic control unit 50 is configured to control the blender 66 and optionally the feed pumps that deliver the withdrawn system oil, the viscosity agent and the TBN agent respectively to deliver the appropriate amounts of respective fluid to the blender 66 and to blend or mix the appropriate amount of the respective fluids in the blender 66.

The electronic control unit 50 is configured to recalculate the required proportions of system oil, viscosity agent and TBN agent when the temperature of the cylinder liner changes and/or when the sulfur content of the fuel changes and to control the blender 66 and the feed pumps of the withdrawn system oil, of the TBN agent and of the viscosity agent accordingly.

Figs. 2 to 5 illustrate a blender 66 according to an example embodiment. The blender 66 according to this embodiment is configured to blend a base oil with a TBN agent, i.e. this blender 66 is not configured to blend a viscosity modifier into the oil to be delivered to the cylinders 2.

The blender 66 according to the embodiment of figure 2 is provided with two intake ports and one discharge port. The blender 66 is further provided with two intake conduits that connect to the respective intake port. The first intake conduit 40 is used to taking TBN agent, e.g. from conduit 81 that connects to the source 61 of TBN agent. A first electronically controlled valve 42 that is controlled by the electronic control unit 50 is placed in the first intake conduit 40. In this example the first electronic control valve 42 is a pneumatically actuated electronic control valve, but any other electronically controlled valve could be used instead. The first intake conduit 40 connects to the aspiration conduit 45 of a pump 68. Depending on the position of the first control valve 42 the intake of the pump 68 is connected to the source of TBN agent or not. The second intake conduit 41 is used to taking base oil from e.g. the used system oil conduit 18 that connects to the used system oil tank 60. A second electronically controlled valve 43 that is controlled by the electronic control unit 50 is placed in the second intake conduit 41. In this example the second electronic control valve 43 is a pneumatically actuated electronic control valve, but any other type of electronically controlled valve could be used instead.

The second intake conduit 41 connects to the aspiration conduit 45 of the pump 68. Depending on the position of the second control valve 43 the intake of the pump 68 is connected to the source of base oil or not.

The pump 68 is provided with a pressure sensor 56 at its intake side and a pressure sensor 57 at its outlet side. The pump 68 is driven by an electric drive motor 73 under control of the electronic control unit 50. Preferably, the pump 68 is a fixed displacement pump driven by a variable speed drive motor. According to another embodiment, the pump 68 is a variable displacement pump. The outlet of the pump 68 is connected to an outlet conduit 59. The outlet conduit 59 connects the outlet of the pump 68 to a third electronically controlled valve 68 that is under command of the electronic control unit 50. The third electronic control valve 68 connects also to a discharge conduit 79 and to a first flexible conduit 54. The discharge conduit 79 is intended to be connected to the feed conduit 83 via the discharge port for transporting the blended product (blended cylinder oil) from the blender 66 to the blended cylinder oil day tank 58.

The blender 66 comprises a tank 63 that is provided with an outlet, an inlet and a vent 99. The vent 99 opens to the ambient air around the tank 63. The outlet of the tank 63 is connected to the aspiration conduit 45 via a second flexible conduit 53 and a restriction 47. The restriction 47 is preferably a variable restriction. The inlet of the tank 63 is connected to the third electronically controlled valve 68 via the first flexible conduit 54. The tank is provided with a low level sensor 71, a high level sensor 72 and an overfill sensor 73. The low level sensor 71 and the high level sensor 72 are connected to the electronic control unit 50. The overfill sensor 73 is hardwired to cut off all electric power to the blender 66 upon activation.

The signal high level switch 72 will cause the electronic control unit 50 to shut down the pump 68 and all valves will go back to "OFF Mode" (no electrical signal to open any valves) . The signal from the low level switch 71 will position the third electronic control valve 68 to connect the outlet conduit 59 to the first flexible conduit 54 (so some oil always will remain in the bottom of the tank 63 to prime the pump 68).

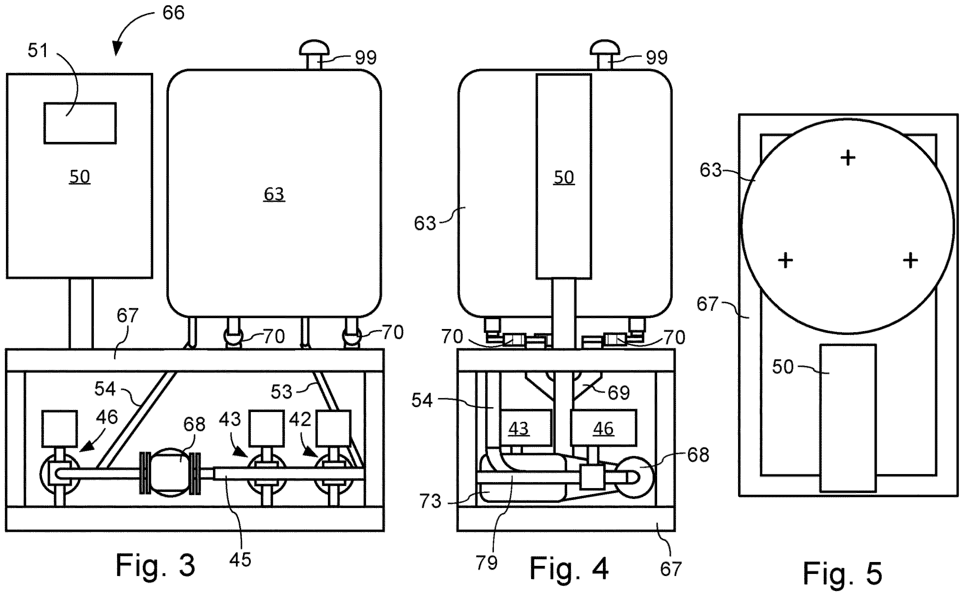

The tank 63 is suspended from a frame 67 or other support by a weighing device. In an embodiment the weighing device comprises at least one load cell 70. In the shown embodiment the weighing device comprises 3 load cells 70 that are supported by the frame 67 via a support structure 69. The 3 load cell 70 are distributed under the tank 63 as indicated by the "+" signs in Fig. 5, so that weight of the tank 63 is substantially equally distributed over the three load cells 70. However, it is understood that a single load cell 70 can be sufficient, e.g. a single load cell placed centrally under the tank 63. The load cell or load cell 70 having output that is representative of the weight on the load cell and the electronic control unit 50 is in receipt of the output of the load cells 70, e.g. via signal cables. The tank 63 is not supported by any other elements except for the load cells 70. In order to achieve this the conduits 53,54 that connect to the tank are flexible conduits that exert practically no force on the tank when it moves relative to the frame 67.

The frame 67 has a cuboid outline and supports both the electronic control unit 50 and the tank 63 as well as the pump 68 piping and electronic first, second and third control valves 42,43,66 and the conduits (piping). The blender 66 with frame 67 forms a skid that can easily be transported and installed. The electronic control unit 50 is provided with a display screen 51, and input means, such as a keypad or a touch function of the display screen 51. The mass (weight) of the content of the tank 63 is measured by the weighing device, for example a weighing device including load cells.

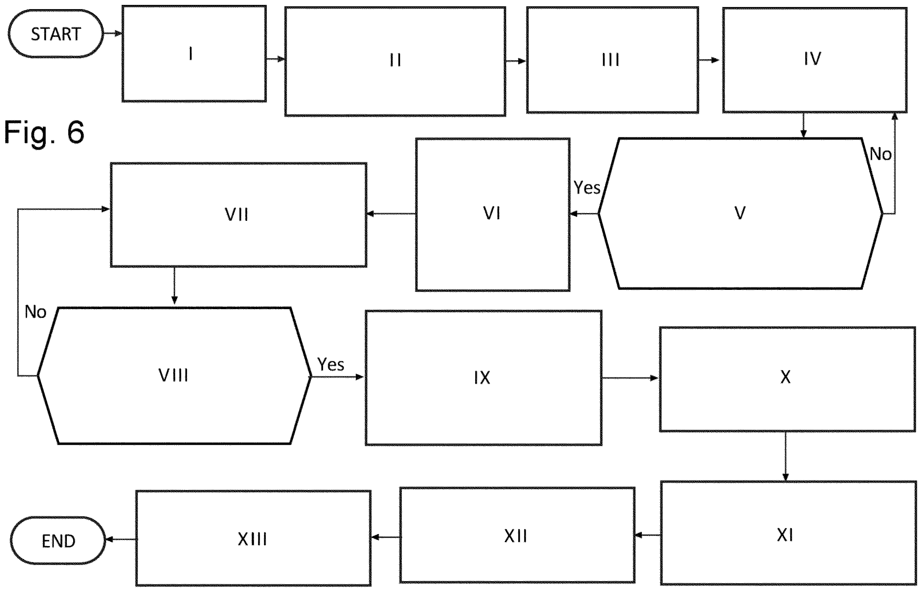

Fig. 6 is a flowchart that illustrates an example embodiment of the operation of the blender 66. The blender can be operated in several modes. One load is a manual mode and the other one is an automatic operation mode.

Before initiating a batch sequence in auto operation mode, the following blending parameters are to be entered in the electronic control unit 50 using e.g. the touch display:

- TBN (first TBN) of the base oil,
- TBN (second TBN) of the TBN agent (composition),
- Required TBN (third TBN) for the blended product,
- Weight of blended composition (product) to be prepared, and/or
- Number of batches to blend (typically 1-10).

The program in the electronical control unit 50 will run the following sequences in automatic mode:

- Determining start weight of the tank 63 including the present content in order to calibrate the weight,
- Calculating a blending parameter (by weight),
- Intake of a major portion, e.g. 90%, of required base oil weight,
- Determining weight of added base oil,
- Calculating TBN agent weight required based on weight of base oil supplied to the tank,
- Intake of a major portion, e.g. 80%, of calculated required TBN agent weight,
- Determining weight of added TBN agent,
- Calculating TBN agent flow rate and required remaining pump running time in order to add remaining amount of TBN agent,
- Intake of remaining TBN agent based on above calculation,

- Blending process,
- Measuring weight of blended product in tank,
- Discharge blended product from tank.

The blender will run the exact same sequence as described above several times when a plurality of batches have been requested. When the requested amount of batches has been blended, the system will stop and wait for a new input by the operator.

The controller 50 is configured to use of the equation below for calculating the required blending proportion or ratio:

$$\left(m_{b\ oil} \times TBN_{b\ oil}\right) + \left(m_{Additive} \times TBN_{agent}\right) = m_{Prod} \times TBN_{Prod}$$

where

- $M_{Prod}$ = Mass of total blended product in kg
- $mb_{oil}$ = Mass of base oil in kg
- $m_{agent}$ = Mass of TBN agent in kg
- $TBN_{Prod}$ = The target TBN for the blended product
- $TBN_{agent}$ = TBN agent TBN
- $TBN_{oil}$ = base oil TBN

In said chart:

I = "Ensure that blending tank is near empty";
II = "Record for predetermined period of time signal of load cells multiple times at short intervals";
III = "Determine present weight of blending tank and content, zero point";
IV = "Take in first oil and monitor weight increase of blending tank with load cell(s)";
V = "Has taken in amount (weight) of first oil reached a major part (e.g. 90%) of requested weight of cylinder oil?";
VI = "Calculate weight of amount of TBN agent needed to obtain desired TBN of blended product";
VII = "Take in TBN agent (additive package) and monitor weight increase of blending tank with load cell(s)";
VIII = "Has taken in amount (weight) of TBN agent reached a major part (e.g. 80%) of calculated weight?";
IX = "Calculating TBN agent flow rate and required remaining pump running time in order to add remaining amount (e.g. 20%) of TBN agent";
X = "Take in TBN agent for calculated required pump running time";
XI = "Pump content of blending tank in re-circulation loop for predetermined period of time";
XII = "Determine weight of blended product on basis of signal from load cells";
XIII = "Discharge blended product to e.g. cylinder oil day tank".

The method of blending the cylinder oil for use in the cylinders of a large two-stroke compression ignited crosshead engine will be described with reference to the flowchart in Fig. 6.

At the start of the procedure (block I), there is a content (e.g. from a previous blending operation) in the blending tank 63 that causes the liquid level in the blending tank 63 to be above the level of the low level liquid sensor 71. If the controller 50 detects that the liquid level is below the low liquid sensor 71, the controller will instruct electronic control valve 43 to open so that the first intake conduit 41 gets in fluid communication with the cylinder oil system conduit 18 to take in base oil from the used system oil tank 60 until the controller 50 receives a signal from the low liquid sensor that the liquid level is above the low level liquid sensor 71.

The pump 68 is running at a constant speed throughout the intake, blending and discharge process. A first pressure sensor 56 at the pump inlet and a second pressure sensor 57 at the pump outlet provide the controller 50 with a signal corresponding to the inlet pressure and the outlet pressure of the pump, respectively.

At the start of the procedure the pump 68 takes in content from the blending tank 63 via the flexible tubing 53 and the restriction 47 and pumps the taken in content back to the blending tank 63 via the output conduit 59, the third electronic control valve 68 and the flexible conduit 54. Commercially available flexible hydraulic hoses or pipes are suitable to be used as a flexible conduit.

The controller 50 is configured to perform a calibration process wherein the controller records the output of the weight sensor 70 multiple times at intervals for a predetermined period of time, thereafter determines the average of the recorded outputs of the weight sensor, and (block III) thereafter stores the determined average as an initial weight of the tank 63 including its present content. This is done for calculating the start weight of the tank 63 including the present content in the tank in order to calibrate the weight (block II). Marine vessels unavoidably have various types of motion, such as the linear motions heaving, swaying and surging and the rotation motions pitch, roll and yaw, that may affect a momentary output of the weight sensor. The calibration is performed in order to avoid that motion of the marine vessel in which the blender could be installed affects the recorded initial weight of the tank 63 inadvertently. This can be achieved by performing multiple measurements of the output of the weight sensor over a given period of time that is sufficiently long to include a plurality of motions of the marine vessel and by averaging out the recorded output. The motion of a large marine vessel is relatively slow and therefore the given period of time needs to be relatively substantial, i.e. at least one minute and preferably several minutes. Preferably, the weight measurements are recorded at regularly spaced intervals, preferably several times per second.

When the initial weight of the blending tank 63 in its initial content have been calibrated or "zeroed", the controller 50 initiates the intake of base oil (block IV) by commanding the second electronic control valve 43 to move to its open position. When taking in base oil the first electronic control valve 42 is closed, so that only base oil is taken in.

The controller 50 calculates the amount (weight) of base oil that needs to be taken in in order to produce a requested amount (as e.g. selected by an operator) of blended product. The controller 50 instructs the second control valve 43 to move to its open position to initiate the intake of base oil. This will allow the pump 68 to aspirate the base oil via the aspiration conduit 45 that is now connected to the second intake conduit 41. During the intake of the base oil the controller 50 monitors the weight of the blending tank 63, and when the weight increase of the blending tank 63 has reached 90% (or another selected major portion of the weight to be taken in) of the amount (weight) that was calculated to be taken in, the controller 50 terminates the intake of base oil by instructing the second electronic control valve 43 to move to its closed position (block V). A major portion of the calculated amount of base oil is taken in instead of the full amount in order to avoid that too much base oil is taken in due to measuring errors which cannot be completely avoided when the blender 66 is installed on a marine vessel due to the marine vessel's motion, and in view of the fact that it is easier to add more base oil or additive when an insufficient amount of either component has been added whilst it is impossible to add more product to the blending tank 63 than it can hold.

Next (optionally), the controller 50 verifies the weight increase of the blending tank 63 during intake of the base oil to thereby accurately determine the weight of the base oil that has been added to the blending tank 63. On the basis of the amount (weight) of base oil that has been taken in the controller 50 calculates the amount (weight) of component (TBN agent) that needs to be taken in in order to arrive at the determined or calculated weight ratio (blending ratio) (block VI).

Thereafter, the controller initiates the intake of the composition with the second TBN, such as a TBN agent, from the source of TBN agent, such as the tank 61 by instructing the first electronic control valve 42 to move to its open position to thereby allow the pump 68 to aspirate the composition from the source of composition via the first intake conduit 40 and conduit 81 (block VII). The controller 50 monitors the weight increase of the blending tank 63 during the intake of the component. When the weight increase of the blending tank 63 corresponds to 80% (or another selected major portion of the calculated amount) of the calculated amount (weight) of the component to be taken in, the controller terminates the intake of the component by instructing the first electronic control valve 42 to move to its closed position.

In the next step (block VII) the controller 50 optionally verifies the weight of the component that has been taken in. The controller 50 has monitored the process of taking in the base oil and taking in the component and associated all actions with a timestamp. Based on these timestamps the controller 50 determines the length of time that was used to take in the component, and based on the weight of the component that has been taken in the controller determines the average flow rate during intake of the component (block IX). Further, the controller 50 determines the difference between the actually taken in amount of component and calculates the to be taken in amount of component. If the intake process of the component was measured and controlled 100% accurately the remaining amount of composition to be added should be 20% if it was planned to take in 80% from the start. However, if for any reason more or less component was taken in during the intake process, the controller can in this step compensate for such an error. Based on this difference in amount (weight) the controller determines the length of the intake time (pump running time with the inlet of the pump connected to the source of component) in order to taking the calculated amount of component to be taken in. Next, (block X) the controller 50 instructs the first control valve 42 to move to its open position for length of time corresponding to the determined length of time so that the remaining portion of the amount of component that was calculated to be taken in is added to the blending tank 63.

During the next phase of the process (block XI) the first electronic control valve 42 and the second electronic control valve 43 are in their closed position and the third electronic control valve 68 is in its position where it connects the outlet conduit 59 to the first flexible conduit (pipe) 54. Thus, the pump 68 will aspirate content of the blending tank 63 via the second flexible conduit (pipe) 53, via the restriction 47 and pump the aspirated tank content back to the tank via the outlet conduit 59, the third electronic control valve 68 and the first flexible conduit 54. Thus, content from the blending tank 63 is circulated and thereby blended. The inlet of the tank 63 that is connected to the first flexible conduit 54 is provided with a hold that creates a liquid jet into the blending tank 63 to further enhance blending of the conduit of the tank. In a preferred embodiment the inlet of the blending tank 63 is connected to a pipe 97 that extends into the blending tank 63 and this pipe 97 is provided with a plurality of holes that are arranged to create a plurality of differently directed liquid jets into the blending tank 63 to further enhance the blending process.

The controller 50 determines the length of time in which the content of the blending tank 63 is circulated. This length of time can be based on an algorithm or on a lookup table and depend on the characteristics of the oil and composition to be blended, as well as on temperature of the content of the blending tank 63. Optionally, the controller 50 performs a final verification of the weight of the blend product on the basis of the signal from the weight sensor.

When the content of the blending tank 63 has been circulated and blended for a sufficiently long time, the controller 50 instructs the third control valve 68 to move to the position where the outlet conduit 59 connects to the discharge conduit 79, to thereby discharge the content of the blending tank 63 via the discharge conduit 79 (block XIII). The discharge conduit 79 can be connected to the feed conduit 83 so that the content of the tank is discharged to the cylinder oil day tank 58. This ends the blending process. It is of course understood that the controller 50 can be programmed to run several batches sequentially, as e.g. instructed by an operator.

The high level switch 72 is operably connected to the controller 50 and the high level switch is configured to issue a high-level signal when the liquid level in the tank 63 exceeds a first level limit. The high level limit my e.g. be 85% of the total volume that can be held in the tank before it flows over via the vent 99 and an overfill limit can e.g. be 95% of the total volume. The controller 50 is configured to prevent intake of content to the blending tank 68 when the controller 50 receives a high level signal from the first high level switch. The overfill switch 73 is configured to detect that the liquid level in the tank exceeds a second level limit that is higher than the first level limit. The overfill 73 switch is hardwired to cut power to the blender 66 when the overfill switch 73 detects that the liquid level in the blending tank 63 is above the second level limit. The controller 50 is configured to terminate operation of the blender 66 when the high level switch 72 has detected that the liquid level in the blending tank 68 is above the first level limit threshold.

The blender 66 comprises a safety circuit (not shown) that is independent from the controller 50, the safety circuit including the hardwiring to cut electrical power to the blender 66 when the overfill switch 73 has detected that the liquid level in the blending tank 68 is above the second level limit.

In an embodiment the controller 50 is configured to take in an amount by weight of the oil before taking in an amount by weight of the composition, and the controller 50 is further being configured to obtain or determine a weight blending ratio for the oil and the composition. The controller (50) is configured to determine the weight of the oil in the tank 63 after taking in the oil, and the controller 50 is configured to determine the amount by weight of the composition that needs to be added to the amount by weight of oil determined to be in the tank 63, and the controller 50 is configured to determine if the total amount of content in the tank 63 by weight or volume will cause the liquid level to exceed the first level limit when the determined amount of composition is added to the oil in the tank. The controller 50 is configured to take in the determined amount of composition only when the determined total amount does not exceed the first level limit.

In an embodiment the controller 50 is configured to terminate operation of the blender 66 when a weight change measured with the weight sensor 70 does not correspond to an expected weight change. For example, when the weight of the tank 63 and its content does not increase during intake of oil or during intake of the component or during discharge of the content of the tank 63, the controller will issue an alarm and stop the blending procedure and/or shut down the blender.

In an embodiment the controller 50 is configured to verify that the overfill switch 73 is tested at regularly spaced intervals, e.g. monthly. The controller 50 is configured to prevent initiation of operation of the blender 66 if the overfill switch is not tested at the end of an interval.

The low level switch 71 is configured to detect that the liquid level in the tank is above a third level limit that is lower than the first level limit. The third level limit can e.g. be at a level that corresponds to 10% of the maximum volume that can be held inside the tank, and the controller 50 is configured to allow operation of the blender 66 after a high level switch activation and/or an overfill switch activation only after receiving a signal from the low level detector that the liquid level in the tank has fallen below the third level limit. The overfill sensor 73 can be provided at an upper region of the tank (63) or at the vent 99.

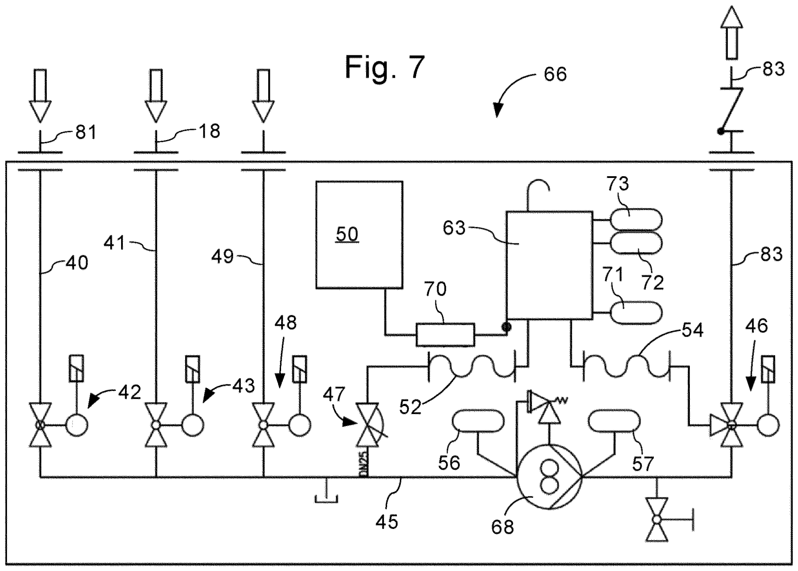

Fig. 7 is a diagram showing a blender according to another example embodiment, that is essentially the same as the embodiment described with reference to Figs. 2 to 6, except that in this embodiment there is a third intake conduit 49 for the intake of a third composition into the blending tank 68. Hereto, the third intake conduit 49 is connected with one end to a third inlet port and with its other end to the aspiration conduit 45. The third inlet port can be connected to e.g. a source of viscosity agent, such as the tank 62 with a viscosity agent. A fourth electronic control valve 48 under command of the controller 50 is placed in the third intake conduit 49. The controller 50 is configured to take in the viscosity agent either before or after taking in the TBN agent. The amount of viscosity agent taken in is controlled by the controller 50 monitoring the weight increase of the blending tank 63 whilst the forth electronic control valve 48 is in its open position. The controller 50 determines the amount of viscosity agent to be taken in as indicated here above. The controller 50 is also configured to ensure blending of the compositions that are taken into the blending tank 63 after all of the components have been taken in by allowing the content of the blending tank 68 to circulate through the circulation circuit established between the inlet and the outlet of the blending tank 68, via the first and second flexible conduit, the restriction 47, the pump 68 and the third electronic control valve 68. The controller determines the length of the time for circulating the basis of an algorithm that takes account of the amount of components taken in, in particular the total amount of all the components that have been taken in. The controller 50 can also be configured to provide for a first blending phase after two compositions have been taken in and a second blending phase after all three components have been taken in. After the blending process has been completed, the controller 50 will verify the total amount of blended product and the range discharge of the blended product via the discharge conduit 83 by changing the position of the third electronic control valve 68.

According to another embodiment (not shown) the blender has only a single intake conduit with an electronic control valve and the selection of the appropriate composition to be taken in is done upstream of the inlet port at the start of the intake conduit. The construction of the blender according to this embodiment is essentially identical to the embodiment shown in Fig. 2, except for the absence of the second intake conduit 41 and its electronic control valve and the of course adapted configuration of the controller. In this embodiment, an operator or an external signal will indicate to the controller 50 whether a 1st, 2nd and 3rd or other composition is being supplied from the exterior of the blender to the inlet port of the 1st intake conduit 40.

In manual mode the steps described above can be controlled directly by an operator, but otherwise the process is essentially identical to the automatic mode.

In an embodiment the blender for batch blending an oil having a first TBN with a composition having a second TBN that is higher than the first TBN to produce a blended composition with a desired third TBN for use as a cylinder oil in a two-stroke compression ignited crosshead combustion engine, the blending apparatus comprises:

- an inlet port for receiving the oil with the first TBN and for receiving the composition with the second TBN,
- a discharge port for discharging the blended composition,
- a tank with a tank inlet and with a tank outlet,
- a weight sensor operably coupled to the tank and configured to produce an output indicative of the weight of the tank and its content.

The invention has been described in conjunction with various embodiments herein. However, other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor, controller, control unit or other unit may fulfill the functions of several items recited in the claims. The mere fact that certain measures are recited in mutually different dependent claims does not indicate that a combination of these measured cannot be used to advantage.

The reference signs used in the claims shall not be construed as limiting the scope.

**Claims**

1. A blender (66) for batch blending an oil having a first total base number -TBN-with a composition having a second TBN that is higher than the first TBN to produce a blended composition with a desired third TBN for use as a cylinder oil in a two-stroke compression ignited crosshead combustion engine (1), the blender comprising:

   - a tank (63) for containing at least one of the oil having the first TBN and the composition having the second TBN,
   - a weight sensor (70) operably coupled to the tank (63) and configured to produce an output indicative of the weight of the tank (63) and a content of the tank (63), and
   - a controller (50) configured to receive the output from the weight sensor (70),
   - the controller (50) being configured to perform a calibration process wherein the controller (50) is configured to record the output of the weight sensor (70) multiple times at intervals for a predetermined period of time, to determine an average of the recorded outputs of the weight sensor (70), and to store the determined average as an initial weight of the tank (63).

2. The blender (66) according to claim 1, wherein the tank (63) is provided with a minimum level sensor (71) configured to provide an output that indicates that a liquid level in the tank (63) is above a given minimum level or not, and wherein the controller (50) is configured to perform the calibration process only when the minimum level sensor (71) indicates that the liquid level in the tank (63) is above the given minimum level.

3. The blender (66) according to claim 2, wherein the controller (50) is configured to initiate supply of the oil having the first TBN from a first inlet port of the blender (66) to the tank (63) if the minimum level sensor (71) indicates that the liquid level in the tank (63) is below the given minimum level.

4. The blender (66) according to any of claims 1 to 3, wherein the controller (50) is configured to control sequential supply of the oil having the first TBN and the composition having the second TBN for filling the tank (63) in order to blend the oil having the first TBN and the composition having the second TBN, and wherein the controller (50) is configured to perform the calibration process before supplying the oil having the first TBN and the composition having the second TBN.

5. The blender (66) according to any of claims 1 to 4, wherein the weight sensor (70) comprises one or more load cells.

6. The blender (66) according to claim 5, wherein the one or more load cells comprises three load cells, and the three load cells are distributed under the tank (63) so that the weight of the tank (63) is substantially equally distributed over the three load cells.

7. The blender (66)_according to any of claims 1 to 6, wherein the predetermined period of time is at least one minute.

8. A method for preparing a cylinder oil for use in a two-stroke compression ignited internal combustion crosshead engine (1) by batch blending, the method comprising:

    A) supplying a controlled amount of oil having a first TBN to a tank (63) and weighing the tank (63) while supplying the oil and determining a weight difference between a first start weight of the tank (63) when initiating the supply of the oil and a first end weight when terminating the supply of the oil,
    B) supplying a controlled amount of a composition having a second TBN higher than the first TBN to the tank (63) and weighing the tank (63) while supplying the composition and determining a weight difference between a second start weight when initiating the supply of the composition and a second end weight when terminating the supply of the composition, and
    C) determining the first start weight by recording multiple measurements of the weight of the tank (63) at intervals during a given period of time and averaging the recorded measurements.

9. The method according to claim 8, wherein c) is performed before a) .

10. The method according to claim 9, further comprising ensuring that a liquid level in the tank is above a given minimum level before c).

11. The method according to any one of claims 8 to 10, further comprising blending the oil having the first TBN and the composition having the second TBN in the tank (63) to obtain a blended composition in the tank (63).

12. The method according to claim 11, further comprising discharging the blended composition from the tank (63).

**Patentansprüche**

1. Mixer (66) zum Chargenmischen eines Öls, das eine erste Gesamtbasenzahl - total base number, TBN - aufweist, mit einer Zusammensetzung, die eine zweite TBN, die höher ist als die erste TBN, aufweist, um eine gemischte Zusammensetzung mit einer gewünschten dritten TBN zur Verwendung als ein Zylinderöl in einer Zweitakt-Kreuzkopf-Brennkraftmaschine (1) mit Kompressionszündung zu produzieren, wobei der Mixer Folgendes umfasst:

    - einen Tank (63) zum Enthalten von mindestens einem von dem die erste TBN aufweisenden Öl und der die zweiten TBN aufweisenden Zusammensetzung,
    - einen Gewichtssensor (70), der mit dem Tank (63) wirkgekoppelt ist und zum Produzieren einer Ausgabe konfiguriert ist, die das Gewicht des Tanks (63) und eines Inhalts des Tanks (63) angibt, und
    - eine Steuerung (50), die zum Empfangen der Ausgabe von dem Gewichtssensor (70) konfiguriert ist,
    - wobei die Steuerung (50) zum Durchführen eines Kalibrierungsvorgangs konfiguriert ist, wobei die Steuerung (50) zum mehrmaligen Aufzeichnen der Ausgabe des Gewichtssensors (70) in Intervallen über einen vorbestimmten Zeitraum zum Bestimmen eines Mittelwerts der aufgezeichneten Ausgaben des Gewichtssensors (70) und zum Speichern des bestimmten Mittelwerts als ein Anfangsgewicht des Tanks (63) konfiguriert ist.

2. Mixer (66) nach Anspruch 1, wobei der Tank (63) mit einem Mindestfüllstandssensor (71) bereitgestellt ist, der zum Bereitstellen einer Ausgabe konfiguriert ist, die angibt, dass ein Flüssigkeitsfüllstand in dem Tank (63) über einem vorgegebenen Mindestfüllstand liegt oder nicht, und wobei die Steuerung (50) zum Durchführen des Kalibrierungsvorgangs nur dann konfiguriert ist, wenn der Mindestfüllstandssensor (71) angibt, dass der Flüssigkeitsfüllstand in dem Tank (63) über dem vorgegebenen Mindestfüllstand liegt.

3. Mixer (66) nach Anspruch 2, wobei die Steuerung (50) zum Einleiten einer Zufuhr des die erste TBN aufweisenden Öls von einem ersten Einlassanschluss des Mixers (66) zu dem Tank (63) konfiguriert ist, wenn der Mindestfüllstandssensor (71) angibt, dass der Flüssigkeitsfüllstand in dem Tank (63) unter dem vorgegebenen Minimalfüllstand liegt.

4. Mixer (66) nach einem der Ansprüche 1 bis 3, wobei die Steuerung (50) zum Steuern einer sequenziellen Zufuhr des die erste TBN aufweisenden Öls und der die zweite TBN aufweisenden Zusammensetzung zum Befüllen des Tanks (63) konfiguriert ist, um das die erste TBN aufweisende Öl und die die zweite TBN aufweisende Zusammensetzung zu mischen, und wobei die Steuerung (50) zum Durchführen des Kalibrierungsvorgangs vor dem Zuführen des die erste TBN aufweisenden Öls und der die zweite TBN aufweisenden Zusammensetzung konfiguriert ist.

5. Mixer (66) nach einem der Ansprüche 1 bis 4, wobei der Gewichtssensor (70) eine oder mehrere Wägezellen umfasst.

6. Mixer (66) nach Anspruch 5, wobei die eine oder mehreren Wägezellen drei Wägezellen umfassen und die drei Wägezellen derart unter dem Tank (63) verteilt sind, dass das Gewicht des Tanks (63) im Wesentlichen gleichmäßig über die drei Wägezellen verteilt ist.

7. Mixer (66) nach einem der Ansprüche 1 bis 6, wobei der vorbestimmte Zeitraum mindestens eine Minute beträgt.

8. Verfahren zur Herstellung eines Zylinderöls zur Verwendung in einer Zweitakt-Kreuzkopf-Brennkraftmaschine (1) mit Kompressionszündung durch Chargenmischen, wobei das Verfahren Folgendes umfasst:

A) Zuführen einer gesteuerten Menge von Öl, das eine erste TBN aufweist, zu einem Tank (63) und Wiegen des Tanks (63) während des Zuführens des Öls und Bestimmen einer Gewichtsdifferenz zwischen einem ersten Anfangsgewicht des Tanks (63) beim Einleiten der Zufuhr des Öls und einem ersten Endgewicht beim Beenden der Zufuhr des Öls,
B) Zuführen einer gesteuerten Menge einer Zusammensetzung, die eine zweite TBN, die höher ist als die erste TBN, aufweist, zu dem Tank (63) und Wiegen des Tanks (63) während des Zuführens der Zusammensetzung und Bestimmen einer Gewichtsdifferenz zwischen einem zweiten Anfangsgewicht beim Einleiten der Zufuhr der Zusammensetzung und einem zweiten Endgewicht beim Beenden der Zufuhr der Zusammensetzung und
C) Bestimmen des ersten Anfangsgewichts durch Aufzeichnen mehrerer Messungen des Gewichts des Tanks (63) in Intervallen während eines vorgegebenen Zeitraums und Mitteln der aufgezeichneten Messungen.

9. Verfahren nach Anspruch 8, wobei c) vor a) durchgeführt wird.

10. Verfahren nach Anspruch 9, ferner umfassend Sicherstellen, dass vor c) ein Flüssigkeitsfüllstand in dem Tank über einem vorgegebenen Mindestfüllstand liegt.

11. Verfahren nach einem der Ansprüche 8 bis 10, ferner umfassend Mischen des die erste TBN aufweisenden Öls und der die zweite TBN aufweisenden Zusammensetzung in dem Tank (63), um eine gemischte Zusammensetzung in dem Tank (63) zu erhalten.

12. Verfahren nach Anspruch 11, ferner umfassend Ablassen der gemischten Zusammensetzung aus dem Tank (63).

**Revendications**

1. Mélangeur (66) destiné à mélanger en discontinu une huile ayant un premier indice de base total -TBN- avec une composition ayant un deuxième TBN qui est supérieur au premier TBN pour produire une composition mélangée avec un troisième TBN souhaité, pour une utilisation comme huile de cylindre dans un moteur à combustion à tête cruciforme à allumage par compression à deux temps (1), le mélangeur comprenant :

- un réservoir (63) destiné à contenir au moins l'une de l'huile ayant le premier TBN et de la composition ayant le second TBN,
- un capteur de poids (70) couplé de manière opérationnelle au réservoir (63) et configuré pour produire une sortie indiquant le poids du réservoir (63) et le contenu du réservoir (63), et
- un contrôleur (50) configuré pour recevoir la sortie du capteur de poids (70),
- le contrôleur (50) étant configuré pour effectuer un processus d'étalonnage dans lequel le contrôleur (50) est configuré pour enregistrer la sortie du capteur de poids (70) plusieurs fois à des intervalles pendant une période de temps prédéterminée, pour déterminer une moyenne des sorties enregistrées du capteur de poids (70), et pour stocker la moyenne déterminée en tant que poids initial du réservoir (63).

2. Mélangeur (66) selon la revendication 1, dans lequel le réservoir (63) est pourvu d'un capteur de niveau minimum (71) configuré pour fournir une sortie qui indique qu'un niveau de liquide dans le réservoir (63) est ou non supérieur à un niveau minimum donné, et dans lequel le contrôleur (50) est configuré pour effectuer le processus d'étalonnage uniquement lorsque le capteur de niveau minimum (71) indique que le niveau de liquide dans le réservoir (63) est supérieur au niveau minimum donné.

3. Mélangeur (66) selon la revendication 2, dans lequel le contrôleur (50) est configuré pour initier l'alimentation de l'huile ayant le premier TBN à partir d'un premier orifice d'entrée du mélangeur (66) dans le réservoir (63) si le capteur de niveau minimum (71) indique que le niveau de liquide dans le réservoir (63) est inférieur au niveau minimum donné.

4. Mélangeur (66) selon l'une quelconque des revendications 1 à 3, dans lequel le contrôleur (50) est configuré pour contrôler l'alimentation séquentielle de l'huile ayant le premier TBN et de la composition ayant le deuxième TBN pour remplir le réservoir (63) afin de mélanger l'huile ayant le premier TBN et la composition ayant le deuxième TBN, et dans lequel le contrôleur (50) est configuré pour effectuer le processus d'étalonnage avant d'alimenter l'huile ayant le premier TBN et la composition ayant le deuxième TBN.

5. Mélangeur (66) selon l'une quelconque des revendications 1 à 4, dans lequel le capteur de poids (70) comprend une ou plusieurs cellules de charge.

6. Mélangeur (66) selon la revendication 5, dans lequel l'une ou les plusieurs cellules de charge comprennent trois cellules de charge, et les trois cellules de charge sont réparties sous le réservoir (63) de sorte que le poids du réservoir (63) est réparti sensiblement également sur les trois cellules de charge.

7. Mélangeur (66) selon l'une quelconque des revendications 1 à 6, dans lequel la période de temps prédéterminée est d'au moins une minute.

8. Procédé de préparation d'une huile de cylindre pour une utilisation dans un moteur à combustion interne à deux temps à allumage par compression (1) par mélange discontinu, le procédé comprenant :

   A) l'alimentation d'une quantité contrôlée d'huile ayant un premier TBN dans un réservoir (63) et la pesée du réservoir (63) tout en alimentant l'huile et en déterminant une différence de poids entre un premier poids de départ du réservoir (63) lors du démarrage de l'alimentation de l'huile et un premier poids final lors de la fin de l'alimentation de l'huile,
   B) l'alimentation d'une quantité contrôlée d'une composition ayant un deuxième TBN supérieur au premier TBN dans le réservoir (63) et la pesée du réservoir (63) tout en alimentant la composition et en déterminant une différence de poids entre un second poids de départ lors du démarrage de l'alimentation de la composition et un second poids final lors de la fin de l'alimentation de la composition, et
   C) la détermination du premier poids de départ en enregistrant plusieurs mesures du poids du réservoir (63) à des intervalles pendant une période de temps donnée et en faisant la moyenne des mesures enregistrées.

9. Procédé selon la revendication 8, dans lequel c) est effectué avant a) .

10. Procédé selon la revendication 9, comprenant également le fait de s'assurer qu'un niveau de liquide dans le réservoir est supérieur à un niveau minimum donné avant c).

11. Procédé selon l'une quelconque des revendications 8 à 10, comprenant également le mélange de l'huile ayant le premier TBN et de la composition ayant le deuxième TBN dans le réservoir (63) pour obtenir une composition mélangée dans le réservoir (63) .

**12.** Procédé selon la revendication 11, comprenant également l'évacuation de la composition mélangée du réservoir (63).

Fig. 1

Fig. 2

EP 4 075 108 B1

Fig. 5

Fig. 4

Fig. 3

Fig. 6

EP 4 075 108 B1

Fig. 7

**EP 4 075 108 B1**

**Patent documents cited in the description**

- EP 16863709

- WO 2006032271 A